# EUROPÄISCHE PATENTANMELDUNG

(11) **EP 2 143 400 A1**
(43) Veröffentlichungstag der Anmeldung: **13.01.2010**
(21) Anmeldenummer: 09008807.1
(22) Anmeldetag: 06.07.2009
(51) Int. Cl.: A61C 8/00

(54) **Zahnimplantat**

(30) Priorität: 07.07.2008 CH 10482008
(71) Anmelder: Steinemann, Samuel, 4054 Basel (CH)
(72) Erfinder: Steinemann, Samuel, 4054 Basel (CH)
(74) Vertreter: Schaad, Balass, Menzl & Partner AG

(57) **Zusammenfassung**

Ein Zahnimplantat besitzt ein mehrgängiges Aussengewinde zum Einschrauben in eine in einem Kiefernknochen vorbereitete Bohrung, wobei das Gewinde drei bis fünf, vorzugsweise vier, Gänge aufweist.

## Beschreibung

Die vorliegende Erfindung betrifft Zahnimplantate.

Zahnimplantate sind künstliche Zahnwurzeln, welche zwecks Ersatz von verlorenen natürlichen Zähnen in den Kieferknochen geschraubt und mit einer Krone, Brücke oder dergl. versehen werden. Ein eingesetztes und eingewachsenes Zahnimplantat sollte sich nicht mehr von selbst lockern können. Um dies sicherzustellen, werden bei heute üblichen Standard-Zahnimplantaten mit einem Durchmesser von 4.5 mm relativ flache Gewinde mit einer Steigung oder Ganghöhe von 1,7 mm verwendet.

Zum Einschrauben von Zahnimplantaten mit solchen Gewinden müssen etwa neun bis zehn Umdrehungen vorgenommen werden, was mit mehreren Nachteilen verbunden ist. Zum einen entsteht durch die Vielzahl von Umdrehungen Abrieb am Knochen, was das Einwachsen verzögert. Zum anderen ist dieses Einschrauben belastend für den Patienten und zudem noch mühsam und zeitaufwendig für den Zahnarzt.

Es wurde auch schon vorgeschlagen, Zahnimplantate mit mehrgängigen Gewinden zu versehen, um durch grössere Steilheit weniger Umdrehungen für das Einschrauben zu benötigen. Allerdings haben sich solche Implantate bislang nicht durchgesetzt, vermutlich deshalb, weil durch steilere Gewinde das Lockerungsrisiko wächst.

Der Erfindung liegt die Aufgabe zugrunde, die Nachteile der bekannten Zahnimplantate zu beheben.

Erfindungsgemäss wird dies erreicht durch ein Zahnimplantat, welches mit einem mehrgängigen Gewinde mit 3 - 5 Gängen versehen ist. Vorzugsweise besitzt ein Zahnimplantat ein Gewinde mit 4 Gängen.

Bei einem Gewinde mit mehreren Gängen ist die Steigung oder Ganghöhe jedes einzelnen Ganges um die Zahl der Gänge vervielfacht, d.h. ein dem eingängigen Standard mit einer Steigung von 1,7 mm entsprechendes zweigängiges Gewinde besitzt eine Ganghöhe von 3,4 mm. Ein Zahnimplantat mit einem solchen Gewinde könnte also mit der Hälfte der Umdrehungen gleich tief eingeschraubt werden. Allerdings hätte bei einem solchen steileren Gewinde der Fachmann mit einem geringeren Widerstand gegen eine Lockerung des Implantats rechnen müssen. Der Zusammenhang zwischen der Steigung oder Ganghöhe des Gewindes und dem Risiko einer Lockerung des Implantats war für mehrgängige Gewinde bisher nicht bekannt.

Es wurde nun überraschend gefunden, dass bei mehrgängigen Gewinden, deren Eindringtiefe pro Umdrehung rein geometrisch durch eine Sinusfunktion des Weges auf der Schraube oder eine Tangensfunktion bezogen auf den Umfang bestimmt ist, der Widerstand gegen das Lockern mit dessen Cosinus abnimmt. Dies bedeutet, dass der Widerstand gegen das Lockern nicht um den gleichen Faktor abnimmt, wie der Vortrieb pro Umdrehung mit der Steigung oder Ganghöhe des Gewindes zunimmt, Am Beispiel: Für ein zweigängiges Gewinde mit der doppelten Ganghöhe eines Standardimplantats, d.h. einer Ganghöhe von 2 x 1,7mm, und somit einem verdoppelten Vortrieb pro Umdrehung von 3,4 mm, beträgt die entsprechende Verringerung des Widerstands gegen das Lockern nur ca. 2,2%.

Mit einem zweigängigen Gewinde sind demnach statt 9 bis 10 Umdrehungen für ein eingängiges Standardimplantat nur noch 4,5 bis 5 Umdrehungen für die gleiche Einschraubtiefe erforderlich. Entsprechend werden für ein dreigängiges Gewinde nur noch 3 bis 3,3 Umdrehungen und für ein fünfgängiges Gewinde noch um die 2 Umdrehungen benötigt. Bei einem fünfgängigen Gewinde ist der Widerstand gegen das Lockern um knapp 20% verringert. Dies ist die Grenze dessen, was für diesen Parameter akzeptabel ist. Die Zahl der Umdrehungen zum Einschrauben ist mit zwei bis drei für den Patienten und den Zahnarzt optimal, was für ein viergängiges Gewinde optimal zutrifft. Dieses benötigt etwa 2,5 Umdrehungen für die betrachtete Einschraubtiefe und bietet einen um nur ca. 10% verringerten Widerstand gegen das Lockern.

Im Folgenden wird anhand der beiliegenden Zeichnungen ein bevorzugtes Ausführungsbeispiel beschrieben. Es zeigen
- Fig. 1: eine schematische Seitenansicht des im Kie- fer liegenden Teils eines Zahnimplantats ge- mäss dem derzeit üblichen Standard
- Fig. 2: eine schematische Ansicht eines viergängigen Zahnimplantats nach der Erfindung

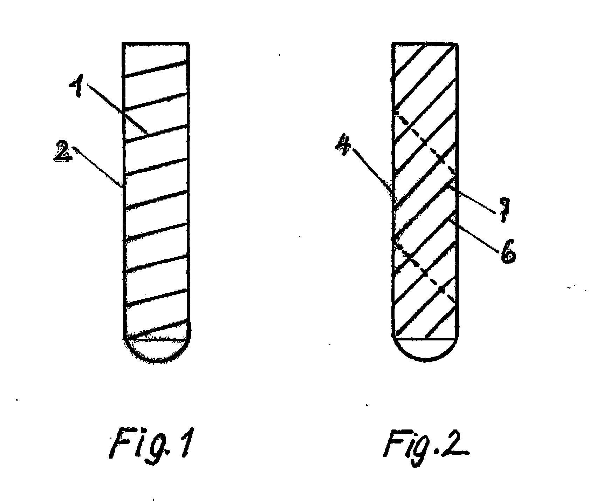

Das in Fig. 1 gezeigte Zahnimplantat besitzt einen zylindrischen, mit einem Gewinde 1 versehenen Teil 2. Ein bei machen Formen gegebenenfalls vorhandener ausserhalb des Knochens bleibender Kopf ist nicht gezeigt. Das eingängige Gewinde 1 hat eine Steigung oder Ganghöhe von etwa 1/9 der Länge des zylindrischen Teils. Das bedeutet, dass für dieses Implantat neun Umdrehungen benötigt werden, um es vollständig in den Kieferknochen einzuschrauben.

Das Implantat hat in der Regel ein in der Zeichnung nicht gezeigtes Innengewinde zur Verankerung des Zahnersatzes, d.h. einer Krone oder einer Brücke aus Keramik oder mit Keramik beschichtetem Metall.

Das in Fig. 2 gezeigte Zahnimplantat besteht ebenfalls aus einem zylindrischen Teil 4 und gegebenenfalls einem nicht gezeigten Kopfteil. Ein Gewinde 6, mit welchem der zylindrische Teil versehen ist, ist viergängig. Um den Verlauf der Gewindegänge zu verdeutlichen ist für einen Gewindegang 7 dessen auf der nicht sichtbaren Rückseite des Implantats verlaufender Teil gestrichelt wiedergegeben. Wie ersichtlich besitzen die einzelnen Gewindegänge eine grosse Steilheit. Dieses Gewinde kann mit weniger als 2,5 Umdrehungen vollständig eingeschraubt werden.

## Patentansprüche

1. Zahnimplantat mit einem mehrgängigen Aussengewinde zum Einschrauben in eine in einem Kiefernknochen vorbereitete Bohrung, **dadurch gekennzeichnet, dass** das Gewinde drei bis fünf Gänge aufweist.

2. Zahnimplantat nach Anspruch 1, **dadurch gekennzeichnet, dass** das Gewinde vier Gänge aufweist.
